# EUROPEAN PATENT SPECIFICATION

(11) **EP 3 628 153 B1**
(45) Date of publication and mention of the grant of the patent: **22.03.2023**
(21) Application number: 19199380.7
(22) Date of filing: 24.09.2019
(51) Int. Cl.: A01M 1/00, A01M 23/08

(54) **BARRIER**
BARRIERE
BARRIÈRE

(30) Priority: 28.09.2018 GB 201815927
(43) Date of publication of application: 01.04.2020
(73) Proprietor: Pelsis Limited, Grimbald Crag Close Knaresborough North Yorkshire HG5 8PJ (GB)
(72) Inventor: ASHTON, Paul, Knaresborough, HG5 8PJ (GB)
(74) Representative: Appleyard Lees IP LLP

(56) References cited:
- JP-A- 2017 023 099
- US-A- 3 885 341
- US-A1- 2015 150 236

## Description

### FIELD

This invention relates to a non-target species barrier, and a pest station configured to retain the non-target species barrier.

### BACKGROUND

Pest stations are used to catch and eliminate vermin and other nuisance animals. For example, rodent stations are used to catch and eliminate rodents. Various types of pest stations are known in the art, and typically define a chamber that comprises a means of capturing or killing the pest (hereinafter a trapping/killing means).

For example, the trapping/killing means may comprise one or more mechanical traps, toxic rodenticide or glue traps. Mechanical traps, also known as snap traps, typically use a spring mechanism which, when triggered, quickly kills a rodent. Other trapping/killing means may involve closing an entrance to the trap in order to trap the rodent without eliminating the rodent, which can then be released back into the environment. Similarly, devices may retain the pest, through a closing entrance, before asphyxiating them with a gas. Bait boxes may involve setting rodenticide (referred to in the art as "bait") which will poison the rodent when consumed. Glue rodent stations catch the rodent such that it cannot escape the trap and eventually dies.

Typically, pest stations, containing the chosen trapping/killing mechanism, are positioned on either known `pest runs', or in locations suspected of having pest activity. This technique is complimented through the pest being lured into the trap by the scent of a foodstuff, referred to in the art as a 'lure' or 'attractant', (e.g. a foodstuff containing the rodenticide, or a foodstuff placed on the mechanical trap). However, there are risks associated with this practice.

When rodenticide is used, it may be poisonous to humans and animals other than the target species (i.e. other than rodents in the case of a rodent station). Children, pets and non-target wildlife species have been known to find rodenticide and to touch it and/or consume it, causing health problems and, in some cases, death to animal life. Therefore, there is a reluctance to employ rodenticide where children, pets, wildlife and livestock can access it. Particular difficulties arise with hedgehogs, squirrels, snakes, and birds accessing rodent stations.

Even if the non-target species is unaffected by the consumption of the rodenticide (e.g. in the case of slugs and snails), the consumption of all or some of the rodenticide and/or associated lure renders the trap significantly less efficacious in trapping the target species.

Similar difficulties arise with pest stations comprising mechanical or glue traps, which inadvertently lure non-target species, thereby causing death/injury to non-target species and rendering the trap ineffective in trapping the target species, having been deployed against the non-target species.

It is an aim of the invention to overcome at least some of the above-mentioned disadvantages, and any other disadvantages that may be apparent to the skilled reader from the description herein. It is a further aim of the invention to provide an improved means of preventing non-target species from accessing a pest station. US 2015/150236 A1 describes a vermin trap including a rotatable passageway and an associated method of use. JP 2017 023099 A describes a trap suitable for capturing snakes and small animals. US 3,885,341 A describes a gypsy moth trap comprising a housing with a multiplicity of apertures.

### SUMMARY

According to the present invention there is provided an apparatus and method as set forth in the appended claims. Other features of the invention will be apparent from the dependent claims, and the description which follows.

According to a first aspect of the invention there is provided a non-target species barrier adapted to prevent ingress of non-target species to a pest station, the non-target species barrier being detachably securable to the pest station and comprising at least one resiliently displaceable member configured to:
move from an initial position to an open position, in which an aperture is formed in the barrier to allow ingress of a target species to the pest station, upon receipt of a force greater than a threshold force, and
return toward the initial position upon release of the force;
wherein the threshold force is such that non-target species are prevented or deterred from moving the displaceable member to the open position.

The initial position may be a closed position.

The non-target species barrier comprises a sheet slidably installable into a retaining portion of the pest station. The non-target species barrier may be a substantially planar member. The non-target species barrier may be unpalatable to target species, and/or inedible by target species, preferably to rodents.

The non-target species barrier may be formed of or comprise cardboard, preferably wax-coated cardboard. The non-target species barrier may be formed of or comprise plastic.

The non-target species barrier may comprise a vacant region substantially free of material, which defines the displaceable member. A width of the vacant region may be too narrow to permit passage of a non-target species therethrough, such as a slug or small rodent. Advantageously, the vacant region allows the target species to smell and/or see a lure through the non-target species barrier.

The displaceable member may be integrally formed with the barrier.

The non-target species barrier may comprise a plurality of displaceable members.

The non-target species barrier may comprise one or more substantially triangular displaceable members. The triangular displaceable members may defined by a zig-zag shaped vacant region. The triangular displaceable members may be defined by a central aperture. The triangular displaceable members may be defined by a plurality of slots extending radially from a substantially central location, preferably the central aperture. The non-target species barrier may comprise one or more rectangular displaceable members.

The non-target species barrier may comprise a border region. The border region may extend inwards from at least one edge of the non-target species barrier. The at least one edge may be a base of the barrier. Preferably, the border region extends inwards by 10mm - 30mm, preferably 20mm. Accordingly, the border region prevents slugs accessing the chamber.

The non-target species barrier may comprise two border regions on opposing edges thereof. Accordingly, the barrier may be inserted from either end such that there is no defined top or bottom, simplifying installation.

The target species is a rodent, preferably a rat, or alternatively a mouse.

The non-target species barrier may advantageously provide a physical barrier to a target species, which physical barrier may be adapted to be breached by a target species. The target species is advantageously attracted to breach the non-target species barrier by means of a lure, such as food.

According to a second aspect of the invention there is provided a pest station for trapping a target species, comprising a chamber, wherein the pest station is configured to retain a non-target species barrier as defined in the first aspect, positioned so as to prevent ingress of non-target species to the chamber.

The pest station comprises a retaining portion configured to retain the non-target species barrier. The retaining portion comprises a plurality of slots, each slot being arranged to retain a respective edge of the non-target species barrier. The retaining portion may comprise a pair of slots, disposed opposite each other. The slots may be substantially vertically orientated, so that the non-target species barrier is receivable by a downward sliding movement into the slots. Each slot may be defined by a pair of parallel projections. The pest station may comprise a plurality of retaining portions, so as to retain a plurality of non-target species barriers.

The pest station comprises an entrance section having an aperture formed therein to allow access to the chamber. The entrance section may comprise a wall having an aperture formed therein to allow access to the chamber. The retaining portion is disposed proximate to the aperture, preferably so that the non-target species barrier covers the aperture once installed. The pest station may comprise a pair of guard walls, extending into the chamber from either side of the aperture. The retaining portion may be formed on the guard walls. The chamber may comprise at least two sub-chambers. The sub-chambers may be accessible from the entrance section. Where there is more than one sub-chamber, each sub-chamber incorporates a trapping/killing zone, adapted to retain a target species attractant and/or a trapping/killing means.

The pest station may comprise a spacer, extending in a direction away from the chamber. The spacer may comprise an upper part of a front wall of the pest station. The aperture may be formed in a lower part of the front wall. The provision of a spacer allows for the pest station to be readily positioned against a wall, but with a gap between the entrance to the box (i.e. the aperture) and the wall, thereby defining a channel.

Some pests, such as rats, are known to stay close to walls when travelling and they are wary of items placed in familiar thoroughfares. The present invention allows for the familiar thoroughfare to remain accessible to the pest, by having a spacer to keep the box away from the wall. This provides a pest station that allows a pest to walk along the wall uninterrupted and so it is more successful in trapping a pest because the pest is not scared away by a change in the contours of the wall or blockage. The pest walks along the wall as normal and then is lured into the chamber through the aperture.

The pest station may comprise a tunnel, extending along a front wall of the pest station, preferably defined by the front wall and a tunnel wall disposed opposite the front wall. The aperture may be formed in the front wall.

The pest station may comprise two retaining portions, disposed at opposing ends of the tunnel or channel.

The pest station, preferably the chamber, may comprise a trapping/killing zone, operable to retain a trapping/killing means. The trapping/killing means may comprise a lure to lure the target species, preferably an olfactory attractant, preferably a foodstuff. The trapping/killing means may comprise poison, preferably rodenticide. The trapping/killing means may comprise a mechanical trap. The mechanical trap may be a snap trap. The pest station may comprise a plurality of trapping/killing zones. The pest station may be a live catch trap, in which case the trapping/killing means is a trapping means. The live catch trap may comprise a door arranged to close behind a pest that has entered the live catch trap. The door may be spring loaded or weighted. The live catch trap may be formed of wire.

The pest station may further comprise the non-target species barrier.

Further preferred features of the pest station of the second aspect are defined hereinabove in relation to the non-target species barrier of the first aspect, and may be combined in any combination.

According to a third aspect of the invention there is provided a kit of parts comprising a pest station as defined in the second aspect and at least one non-target species barrier as defined in the first aspect.

Further preferred features of the kit of parts of the third aspect are defined hereinabove in relation to the non-target species barrier of the first aspect and the pest station of the second aspect, and may be combined in any combination.

According to a fourth aspect of the invention there is provided a method of servicing a pest station comprising the step of:
installing a non-target species barrier as defined in the first aspect, so as to prevent ingress of non-target species to a chamber of the pest station.

The method may comprise the step of removing a damaged non-target species barrier, before installing an undamaged non-target species barrier.

Further preferred features of the method of the fourth aspect are defined hereinabove in relation to the non-target species barrier of the first aspect and the pest station of the second aspect, and may be combined in any combination.

All of the features described herein may be combined with any of the above aspects, in any combination.

### BRIEF DESCRIPTION OF DRAWINGS

For a better understanding of the invention, and to show how embodiments of the same may be carried into effect, reference will now be made, by way of example only, to the accompanying diagrammatic drawings in which:
FIGs. 1-3 are perspective, side and rear views of a pest station according to an example of the invention;
FIG. 4 is a perspective view of the pest station of FIGs. 1-3 and an example non-target species barrier;
FIGs. 5A-C are perspective views of the pest station of FIGs 1-4 with the non-target species barrier installed;
FIG. 6 is a schematic plan view of a first layout of an exemplary pest station;
FIG. 7 is a schematic plan view of a second layout of an exemplary pest station
FIG. 8 is a perspective view of a first exemplary non-target species barrier;
FIG. 9 is a perspective view of a second exemplary non-target species barrier;
FIG. 10 is a perspective view of a third exemplary non-target species barrier;
FIG. 11 is a perspective view of a fourth exemplary non-target species barrier, and
FIG. 12 is a perspective view of a fifth exemplary non-target species barrier.

In the drawings, corresponding reference characters indicate corresponding components. The skilled person will appreciate that elements in the figures are illustrated for simplicity and clarity and have not necessarily been drawn to scale. For example, the dimensions of some of the elements in the figures may be exaggerated relative to other elements to help to improve understanding of various examples of the invention. Also, common but well-understood elements that are useful or necessary in a commercially feasible example are often not depicted in order to facilitate a less obstructed view of these various examples.

### DESCRIPTION OF EMBODIMENTS

In overview, examples of the invention provide a non-target species barrier that, when installed in a pest station, prevents the non-target species accessing the chamber housing a lure and a trapping/killing means. However, the barrier is configured so that a target species is able to push through the barrier by displacing one or more displaceable members (e.g. by gnawing, chewing or scratching at the barrier), and therefore access the chamber. The barrier has a construction that allows it to withstand attempts to access the chamber by non-target species. In addition, the construction of the barrier is such that it can be used a number of times without requiring replacement.

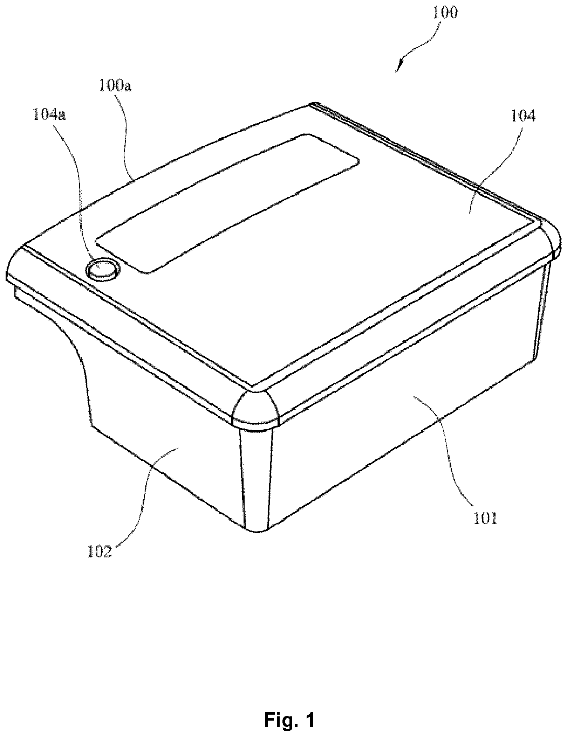

FIGs. 1-5 show an exemplary pest station 100. In the example shown, the pest station 100 is a rodent station, arranged to capture/eliminate rats or mice.

The pest station 100 comprises a chamber 110, defined by rear wall 101, side walls 102, front wall 103 and lid 104. The rear wall 101 and front wall 103 are disposed substantially opposite, and in a plane substantially parallel, each other. Similarly, the side walls 102 are disposed substantially opposite, and in a plane substantially parallel, each other. In one example, the pest station 100 also comprises a floor 106, disposed substantially opposite and in a plane that is generally parallel to the lid 104. Accordingly the pest station 100 takes the form of a cuboid body. It will be understood that the terms front and rear are relative terms intended to differentiate one end of the station from another.

The chamber 110 is arranged to retain one or more trapping/killing means. In the example shown, two trapping/killing zones 111a,b are provided within the chamber, at opposite sides thereof. Each trapping/killing zone 111a,b is arranged to retain a trapping/killing means. For example, each zone 111a, b may have suitable means for retaining a snap trap, glue trap, or rodenticide.

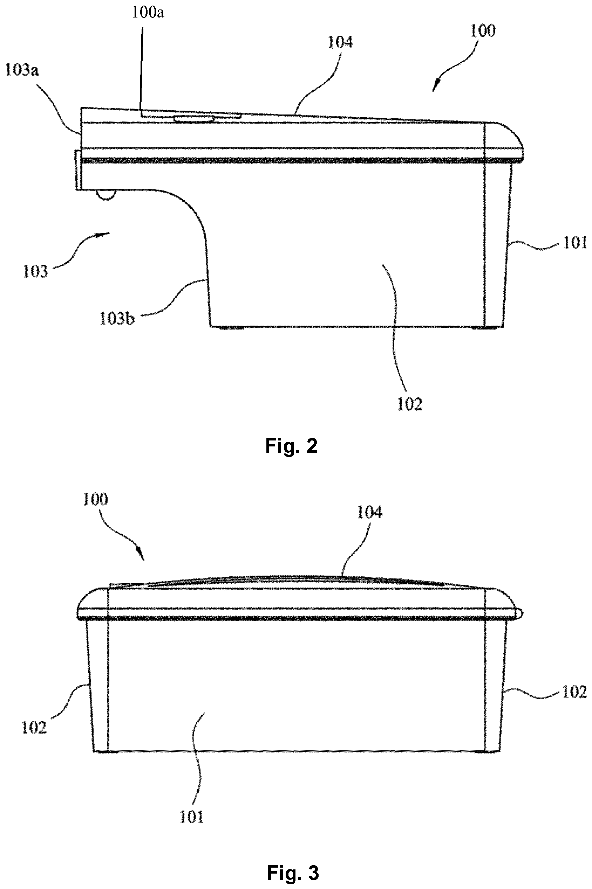

As can be best seen in FIG. 2, the front wall 103 comprises an upper portion 103a and a lower portion 103b.

The lower portion 103b is disposed in a plane substantially parallel to the plane of the upper portion 103a. The lower portion 103b is positioned behind the upper portion 103a - in other words the distance between the lower portion 103b and the rear wall 101 is smaller than the distance between the upper portion 103a and the rear wall 101. Accordingly, the front wall 103 has a stepped configuration when viewed from the side.

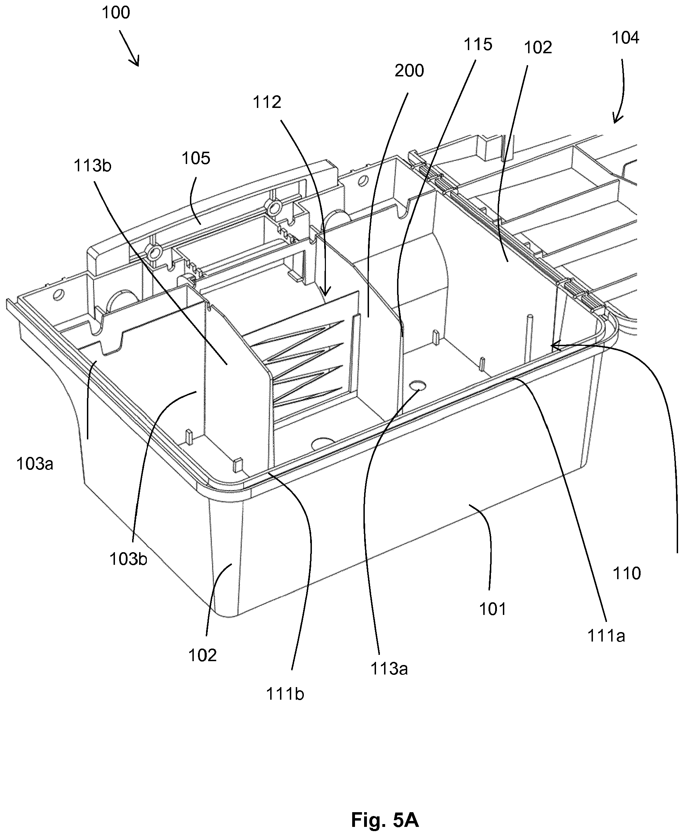

Once the upper portion 103a of front wall 103 is disposed against a wall (e.g. an exterior or interior wall of a building), the lower portion 103b faces the wall but is spaced therefrom by the upper portion 103a and a front portion 100a of the box 100 extending forward of the lower portion 103a and away from the chamber 110, which accordingly acts as a spacer. The front portion 100a defines a channel thereunder, through which rodents can pass whilst remaining substantially in contact with the wall. In one example, the upper portion 103 is securable to the wall, for example by means of screws, adhesive or the like. For example, as shown in FIGs 5A-B, a bracket 105 may be secured (e.g. screwed) to the wall, wherein the bracket 105 is detachably securable to the upper portion 103a.

Advantageously, this allows the rodent to pass along the wall/floor whilst being minimally disturbed by the box, thus preventing the rodent's neophobic instincts from being activated. Accordingly, the boxes are more efficacious, as fewer rodents are scared away therefrom. A pest station 100 having this advantageous configuration is described in further detail in PCT/GB2017/051758 and GB1610567.8, the contents of which are incorporated herein by reference.

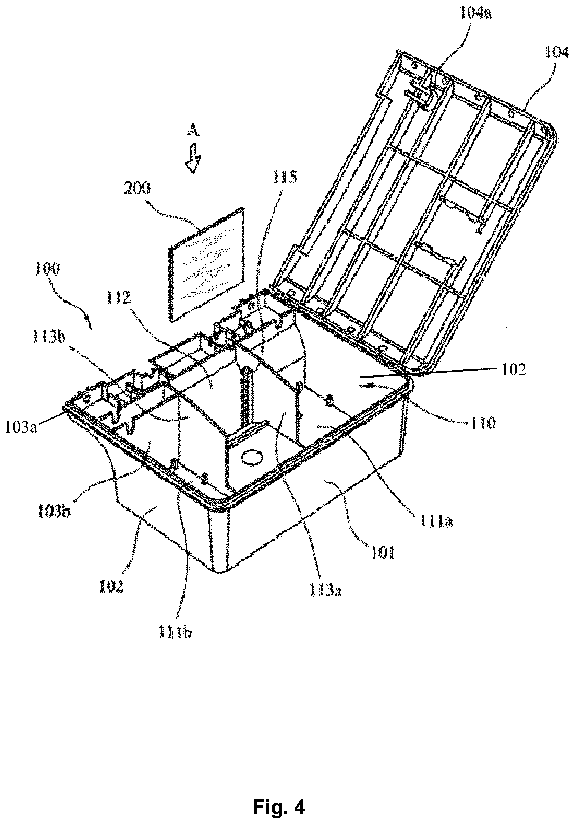

As can be best seen in FIG. 4, the lower portion 103b comprises an aperture 112, which allows access to the chamber 110. In one example, two guard walls 113a, b are formed adjacent the aperture 112 and internal to the chamber 100 extending towards, but not reaching, the rear wall 101. The two trapping/killing zones 111a, b are therefore each positioned between a respective guard wall 113 and side walls 102. The guard walls 113 therefore define a corridor extending into the chamber 110, which then separates into two sub-chambers each comprising a trapping/killing zone 111.

The lid 104 may be opened to allow access to chamber 110, in order to maintain the station 100. In one example, the lid 104 is hingedly connected to the station 100. For example, the lid 104 is hingedly connected to one of the walls 101,102,103. In one example, a lock 104a is provided to secure the lid 104 shut. For example, the lock 104a may be a combination lock or a lock openable by a key. Accordingly, the lid 104 can only be opened by an authorised service engineer.

The pest station 100 comprises a retaining portion operable to retain a non-target species barrier 200, which will be described in more detail below. Particularly, the barrier 200 is retained so as to prevent access to the chamber 110 via the aperture 112.

In one example, the retaining portion comprises a plurality of downwardly-extending slots, each slot being defined by a pair of runners 115. Accordingly, a non-target species barrier 200 can be slid downwards in direction A into the slots, so that it is retained in the station 100.

It will be understood that, in other examples, the slots could be horizontally-extending to permit the insertion of a barrier 200 in a horizontal direction, or arranged at any other angle. Furthermore, a combination of three slots could be used (e.g. two vertical and one horizontal), so as to retain three sides of the barrier 200.

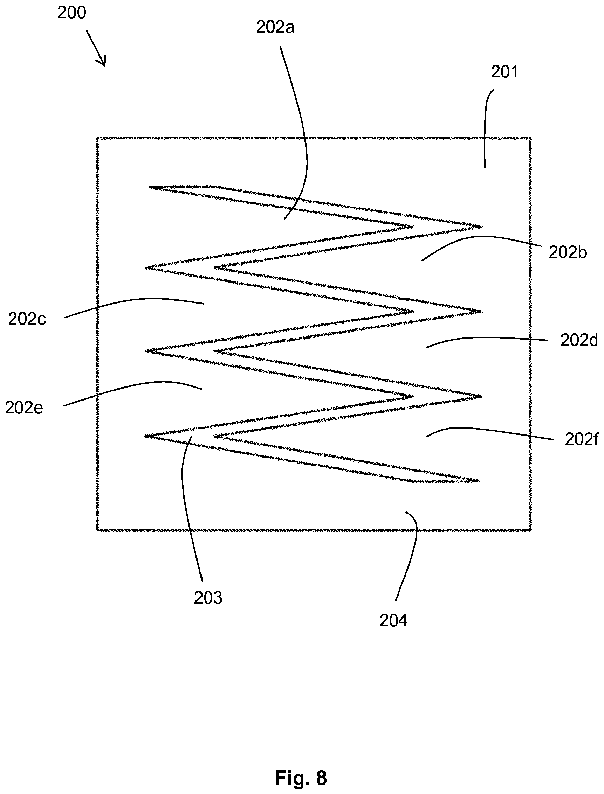

An exemplary non-target species barrier 200 will now be described with reference to FIG. 8. The barrier 200 takes the form of a relatively thin, planar sheet 201, comprising a plurality of displaceable members 202. In particular, a zig-zag shaped slot 203 that is vacant of material is formed in the barrier 200, and the slot 203 defines 6 triangular displaceable members 202a-f. Each displaceable member 202 has two free sides defined by the slot 203, with a third side connected to the remainder of the barrier 200. In one example, the slot 203 is cut into a blank barrier 200, in order to form the displaceable members 202a-f, and so the displaceable members 202 may form an integral part of the barrier.

The displaceable members 202 are configured to flex upon receipt of sufficient force. This flexing of the displaceable member 202 allows the displaceable members 202 to be displaced - i.e. to move upon receipt of the force from its initial closed position. Once displaced, the displaceable member 202 reveals an aperture in the barrier 200, which allows entry of the target species.

In addition, the displaceable members 202 are resilient. In other words, they are biased to the initial position, so that once displaced they return toward the initial position. The resilient nature of the displaceable members 202 may be as a result of the materials chosen for the barrier 200 and/or the construction thereof. For example, the material may have an inherent flexibility and/or elasticity that causes the displaceable members 202 to return toward the initial position. Alternatively, a coating applied to the material may give the displaceable members the relevant flexibility and/or elasticity.

The force required to cause displacement of the displaceable members 202 (referred to herein as the "threshold force") is chosen so that the displaceable members 202 can be displaced by a target species (e.g. a rat or a mouse). Furthermore, the threshold force is chosen so that the displaceable members 202 either cannot be displaced by relevant non-target species (e.g. smaller species of rodent or birds), or so that the non-target species are sufficiently deterred by the force required that they lose interest in the contents of the pest station 100. The materials chosen for the barrier 200 and the construction thereof may effectively determine the threshold force - stiffer materials and/or a thicker construction will result in displaceable members 202 that are more difficult to move.

It will be understood that the displaceable members 202 need not return all the way to their initial position on every occasion. Particularly, the barrier 200 is a consumable product that wears over time, and which therefore periodically (e.g. every 2-3 months) requires replacement. Accordingly the barrier 200 is repeatedly used, the resilience of the displaceable members 202 may decrease, meaning that the displaceable members 202 are less inclined to return to their original position.

The width of the slot 203 is set such that the scent of the lure associated with the trapping/killing means to be seen and smelled by the target species pest. However, the slot 203 may be small enough to prevent a non-target species (e.g. a slug or small rodent) passing therethrough.

In one example, the barrier 200 is formed from cardboard, or comprises cardboard. The cardboard may be wax-coated. In other examples, the barrier 200 is formed from, or comprises, plastic.

A border region 204 extending around the periphery of the sheet 201 has no apertures 202 formed therein, and is retained in use by the retaining portion of the station 100. In addition, the border 204 is larger at the bottom of the barrier 200 (e.g. approximately 20mm), to prevent slugs crawling through. A similarly sized border may be provided at the top edge of the barrier 200. Accordingly, the barrier 200 may be installed in either orientation, simplifying installation.

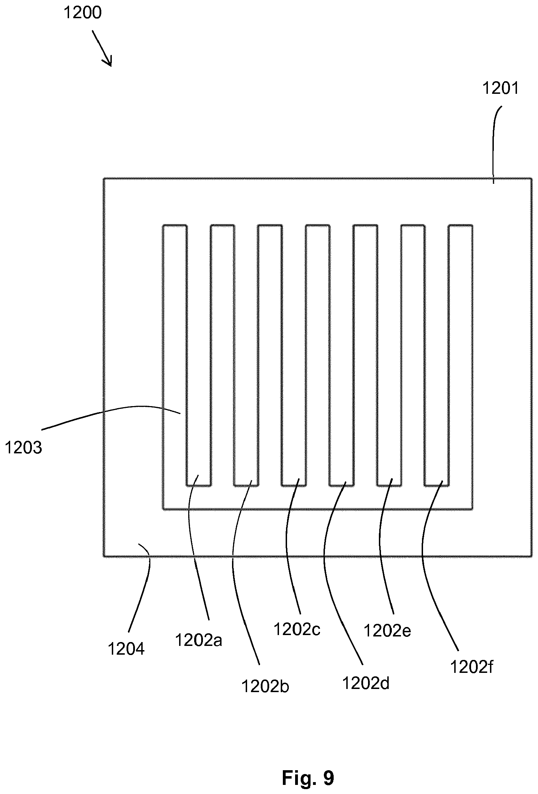

A second example non-target species barrier 1200 is shown in FIG. 9. The barrier 1200 corresponds largely in structure and function to the example described above with reference to FIGs 8, with reference numerals incremented by 1000. Accordingly, a detailed discussion of common elements will not be repeated.

The barrier 1200 differs from barrier 200 in terms of the shape and configuration of the displaceable members 1202. In particular, the barrier 1200 comprises a plurality of rectangular displaceable members 1202a-f. The rectangular displaceable members 1202a-f are disposed in parallel on the barrier 1200, so as to take the form of tines extending downward from the top of the barrier. The tines each have 3 free sides surrounded by a region 1203 substantially vacant of material. Accordingly, the plurality of displaceable members 1202a-f are able to flex and effectively hinge at the point at which they are connected to the barrier 1200, upon receipt of a force above the threshold force.

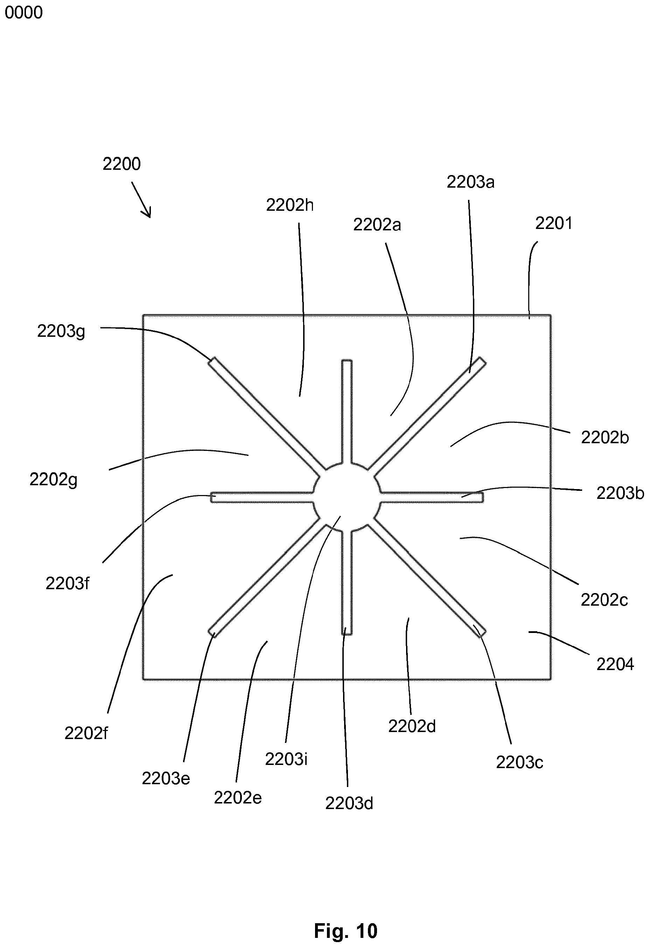

A third example non-target species barrier 2200 is shown in FIG. 10. The barrier 2200 corresponds largely in structure and function to the examples described above with reference to FIGs 8-9, with reference numerals incremented by a further 1000. Accordingly, a detailed discussion of common elements will not be repeated.

The barrier 2200 comprises a central aperture 2203i, with a plurality of linear slots 2203a-h extending radially outward from the aperture 2203i, so as to give the appearance of spokes 2203a-h extending from a central hub. Accordingly, this region 2203, which is substantially vacant of material, defines a plurality of generally triangular displaceable members 2202a-h. Each triangular displaceable member 2202 has two free sides defined by a pair of the spokes 2203, and the tip of the triangle between the two free sides defines the central aperture.

Accordingly, the plurality of displaceable members 2202a-h are able to flex and effectively hinge at the point at which they are connected to the barrier 2200, upon receipt of a force above the threshold force. This then expands the central aperture 2203i, permitting the target species to pass through the barrier.

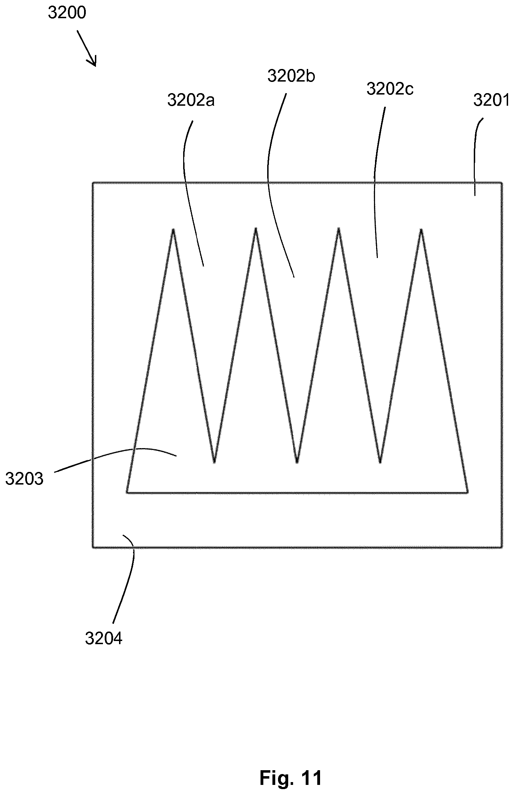

A fourth example non-target species barrier 3200 is shown in FIG. 11. The barrier 3200 corresponds largely in structure and function to the examples described above with reference to FIGs 8-10, with reference numerals incremented by a further 1000. Accordingly, a detailed discussion of common elements will not be repeated.

The barrier 3200 comprises a region 3203 vacant of material that takes the form of 4 adjacent triangles, with connected bases. Accordingly, the region 3202 defines three triangular displaceable members 3202a-c.

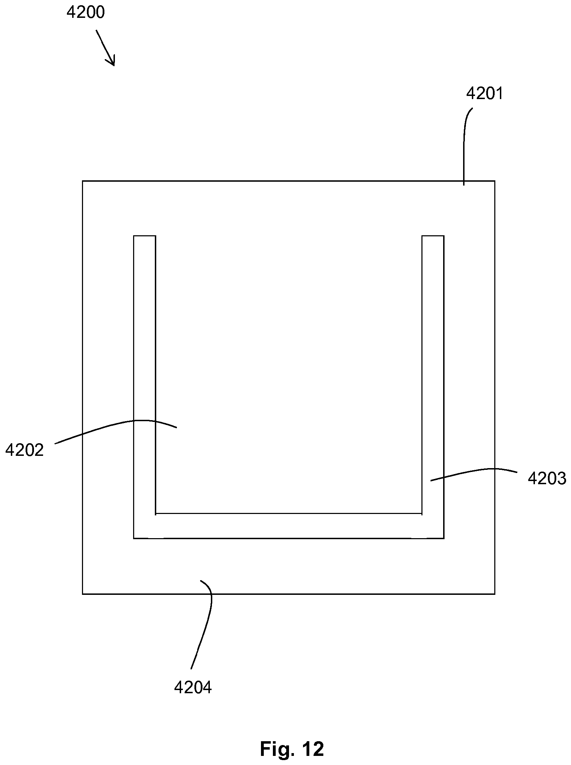

A fifth example non-target species barrier 4200 is shown in FIG. 12. The barrier 4200 corresponds largely in structure and function to the examples described above with reference to FIGs 8-11, with reference numerals incremented by a further 1000. Accordingly, a detailed discussion of common elements will not be repeated.

The barrier 4200 is structurally similar to the barrier 1200. However, the barrier 4200 comprises a single displaceable member 4202. The displaceable member 4202 takes the form of a substantially square region of the barrier 1200, which is surrounded on 3 sides by U-shaped slot 4203.

It will be appreciated that the example barriers 200, 1200, 2200, 3200, 4200 described herein are merely examples, and that a wide variety of alternative configurations of displaceable members 202/1202/2202/3202/4202 formed in the barriers are possible within the scope of the invention. Any configuration of slots or regions vacant of material in the barrier that define a displaceable member that can be pushed by the target species to allow access through the barrier may be employed.

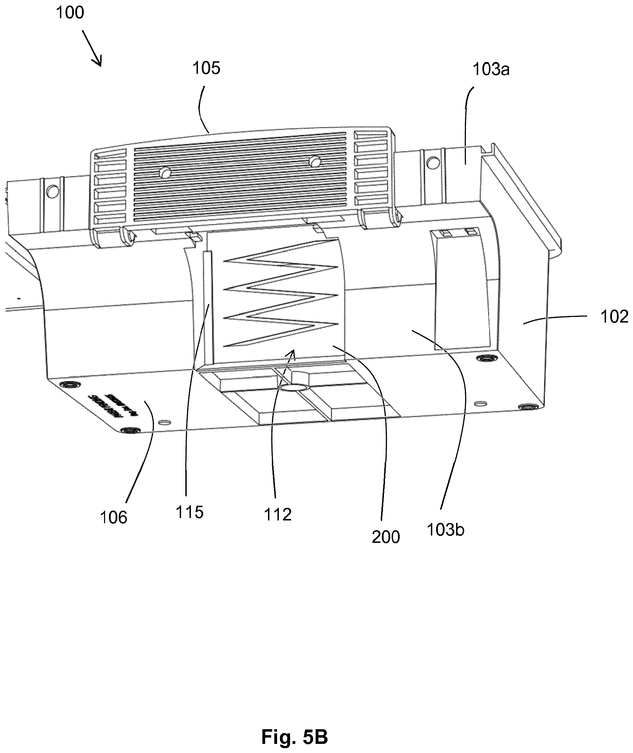

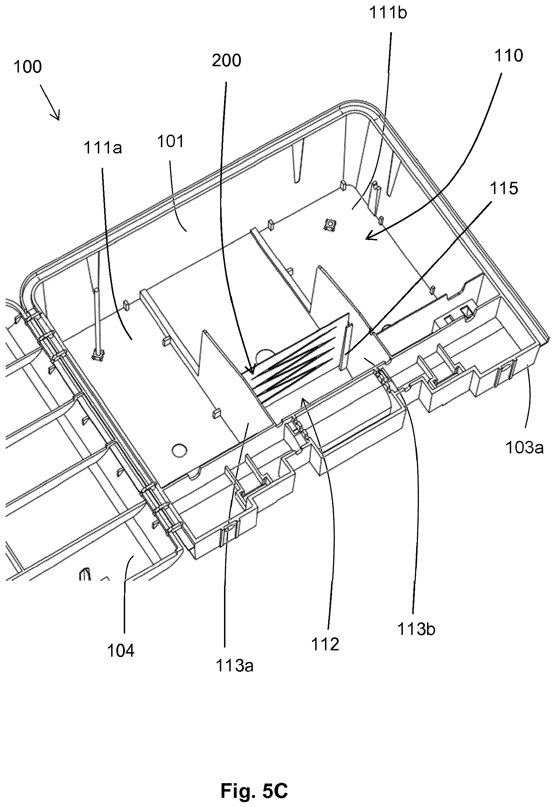

Use of the pest station 100 and non-target species barrier 200 will now be discussed with particular reference to FIGs 4 and 5.

Initially, the pest station 100 is installed, for example so that the upper portion 103a of front wall 103 abuts a wall (not shown). The lid 104 is then opened, and trapping/killing means are placed in respecting trapping/killing zones 111a,b. For example, this may involve placing traps (e.g. mechanical and/or glue traps), and/or deploying rodenticide. The trapping/killing means will comprise a lure, for example in the form of a foodstuff, to attract the pest to the pest station 100.

Either before or after placing the trapping/killing means, a non-target species barrier 200 is installed in the retaining portion of the pest station 100, for example by sliding it into the slots formed by runners 115. Accordingly, the path from the entry to the station (i.e. aperture 112) to the lure is blocked by the barrier 200. In further example, the barrier 200 may be installed in the pest station 100 before installation (e.g. during construction).

The lid 104 is then closed, and locked by lock 104a.

After installation, if a target species, for example a rat, is drawn to the pest station by the lure, it may attempt to access the chamber 100. The barrier 200 blocks the path of the rat to the trapping/killing means.

However, the construction of the barrier 200 is such that the rat, motivated by the scent of the lure which can be smelled via the slot 203, will push against the barrier 200. The force exerted by the rat exceeds the threshold force, and therefore the displaceable members 202a-f yield, thereby forming an aperture in the barrier 200 that permits the rat to breach the barrier and enter the chamber 110.

After breaching the barrier 200, the rat will reach the trapping/killing means and be trapped/killed thereby. Furthermore, the displaceable members 202 return to, or towards, their original position.

If, on the other hand, a non-target species is drawn to the pest station by the lure, it may attempt to access the chamber 110. The barrier 200 will block the path of the non-target species to the trapping/killing means.

In some cases, a non-target species (e.g. a rodent smaller than a rat) will not have sufficient strength to move the displaceable members 202 into a position where access through the barrier 200 is possible. In other cases, a non-target species (e.g. a hedgehog or squirrel) will be deterred by the presence of the barrier 200, and therefore be insufficiently motivated to exert the required force to move the displaceable members 202 attempt to breach it. Accordingly, the non-target species will not access the chamber 100.

Of course, a non-target species may arrive after the target species has already breached the barrier 200. However, because the displaceable members 202 have returned to, or at least toward, their original position, the barrier 200 remains a deterrent to non-target species after the chamber 110 has been accessed by the rat. Accordingly, in examples where rodent station 100 comprises a plurality of trapping/killing zones 111, the trapping/killing zone 111 not activated by the rat is not accessible by non-target species.

Subsequently, a user (e.g. a service engineer) services the pest station 100 by opening the lid 104 and removing the dead/trapped pest. The resilient nature of the barrier 200 means that, in most instances, the barrier may simply remain in position. The service engineer may then replace the trapping/killing means, or reset trapping/killing means in the case of mechanical traps. The pest station 100 is then ready for subsequent use.

However, as the barrier 200 is repeatedly used, the displaceable members 202 may be less inclined to return to their original position. Accordingly, the barrier 200 may periodically be removed and discarded, and replaced with a new barrier 200.

Each of barriers 1200, 2200, 3200, 4200 operate in a corresponding manner.

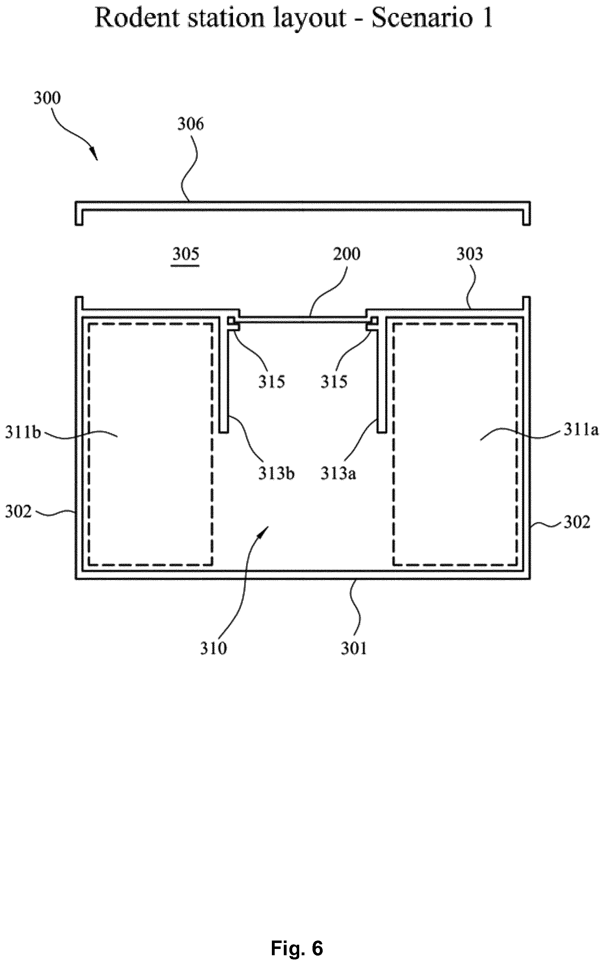

FIG. 6 shows a pest station 300 according to a further example of the invention. The pest station 300 corresponds largely in structure and function to the example described above with reference to FIGs 1-5, with reference numerals prefixed with "3" corresponding to those prefixed with "1" in the description of pest station 100. Accordingly, a detailed discussion of those elements will not be repeated.

However, the pest station 300 differs from pest station 100 by comprising a tunnel 305 defined by front wall 303, and tunnel wall 306. The tunnel wall 306 encloses the tunnel 305. Accordingly, the channel along which the pest passes is not defined by the wall against which the station 300 is placed, but instead by the tunnel wall 306.

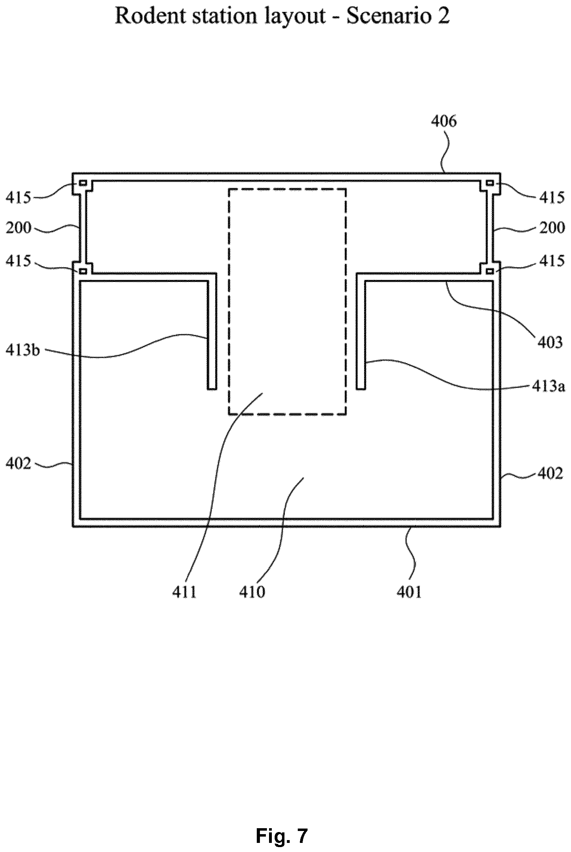

FIG. 7 shows a pest station 400 according to a further example of the invention. The pest station 400 corresponds largely in structure and function to the exemplary pest stations 100, 300 described above, with reference numerals prefixed with "4" corresponding to those prefixed with "1" in the description of pest station 100 and "3" in the description of pest station 300. Accordingly, a detailed discussion of those elements will not be repeated.

However, the pest station 400 differs in that a pair of non-target species barriers 200 are included. Particularly, a respective barrier 200 is disposed at each end of the tunnel 405, so as to prevent ingress to the tunnel 405. Accordingly, the tunnel 405 can be considered the chamber in this example.

Furthermore, pest station 400 differs in that it comprises a single trapping/killing zone 411, for retaining a single trapping/killing means. In one example, the pest station 400 is configured so that the trapping/killing means extends into the tunnel, thereby trapping/killing pests passing along the tunnel 405 without the pests having to enter interior chamber 410.

The example pest stations 300, 400 operate in a similar manner to pest station 100, and therefore a detailed description of the use thereof will not be repeated.

It will be appreciated that various modifications to the examples described herein will be apparent to the skilled reader, and are within the scope of the invention.

Whilst the examples above are of rodent stations for catching/killing rats, it will be appreciated that a barrier comprising displaceable elements that may be moved by a target pest whilst having sufficient strength or rigidity to deter a non-target pest, may be used in the capture of a wide variety of pests.

It will be further understood that, whilst the pest stations 100, 300, 400 described above define a channel along which a pest passes, the pest stations may have a different construction not involving such a channel. For example, an aperture may be simply formed in a side wall of the station, with the barrier 200 disposed to prevent access via the aperture. Alternatively, the pest station may be a live catch trap, which incorporates a spring-loaded or weighted door that shuts behind a pest entering the trap, so as to catch it humanely. Such live catch traps are typically formed of a wire cage.

The location and number of barriers 200 retained within the pest station 100 may be varied. For example, the barrier 200 may be disposed further inside the station 100, so that a pest must travel some way into the station 100 before reaching it. In a further example, a barrier may be disposed corresponding to each trapping/killing means.

The pest stations may comprise more or fewer trapping/killing means - for example 1, 2, 3 or 4 trapping/killing means. Each station may comprise a combination of different types of trapping/killing means - e.g. rodenticide combined with mechanical traps.

Advantageously, the non-target species barriers and pest stations described herein reduce the likelihood that a non-target species will access the interior of the pest station and activate the trapping/killing means. Accordingly, death and injury of non-target species is prevented. Furthermore, the return of the resilient displaceable members to their original position ensures the barriers act as a continuing deterrent even after the target species has accessed the chamber. In addition, deterrence of the non-target species ensures that the pest station is still available for trapping/killing the target species.

Furthermore, the barrier is cheap and easy to manufacture from a readily available material such as cardboard. In addition, the construction of the barrier ensures that the scent of a lure in the pest station can still be smelled by the target species.

## Claims

1. A non-target species barrier (200) adapted to prevent ingress of non-target species to a pest station (100), **characterised by** the non-target species barrier (200) being detachably securable to the pest station (100) and comprising at least one resiliently displaceable member (202) configured to:
move from an initial position to an open position, in which an aperture is formed in the barrier (200) that allows ingress of a target rodent species to the pest station, upon receipt of a force greater than a threshold force from the target rodent species, and
return toward the initial position upon release of the force;
wherein the threshold force is such that non-target species are prevented from moving the displaceable member (202) to the open position, the non-target species being a species with insufficient strength to exert the threshold force and breach the barrier (200),
wherein the non-target species barrier (200) comprises a sheet (201) slidably installable into a retaining portion of the pest station (100).

2. The non-target species barrier of any preceding claim, wherein the non-target species barrier (200) is formed of cardboard or plastic.

3. The non-target species barrier of any preceding claim, comprising a vacant region (203) substantially free of material, which defines the displaceable member.

4. The non-target species barrier of any preceding claim, wherein the displaceable member (202) is integrally formed with the barrier (200).

5. The non-target species barrier of any preceding claim, wherein the non-target species barrier (100) comprises one or more substantially triangular displaceable members (202a-f).

6. The non-target species barrier of claim 5, wherein the triangular displaceable members (202a-f) are defined by a zig-zag shaped vacant region (203).

7. The non-target species barrier of any preceding claim, comprising a border region (204) extending inwards from at least one edge of the non-target species barrier.

8. A pest station (100) for trapping a target species, comprising a chamber (110), wherein the pest station (100) is configured to retain a non-target species barrier (200) as defined in any preceding claim, positioned so as to prevent ingress of non-target species to a chamber (110), the pest station (100) further comprising:
a retaining portion, configured to retain the non-target species barrier (200),
wherein the retaining portion comprises a plurality of slots, each slot being arranged to retain a respective edge of the non-target species barrier (200); and
an entrance section comprising an aperture (112) formed therein to allow access to the chamber (110);
wherein the retaining portion is disposed proximate to the aperture (112) so that the non-target species barrier covers the aperture once installed (112);
wherein the chamber (110) comprises a trapping/killing zone (111a,b), operable to retain a trapping/killing means.

9. A kit of parts comprising a pest station (100) as defined in claim 8 and at least one non-target species barrier (200) as defined in claims 1-7.

10. A method of servicing a pest station (100) as defined in claim 8, comprising the step of:
installing a non-target species barrier (200) as defined in claims 1-7, so as to prevent ingress of non-target species to a chamber (110) of the pest station (100).

## Patentansprüche

1. Barriere für Nichtzielspezies (200), die geeignet ist, um Eindringen von Nichtzielspezies in eine Ungezieferstation (100) zu verhindern, **dadurch gekennzeichnet, dass** die Barriere für Nichtzielspezies (200) abnehmbar an der Ungezieferstation (100) gesichert werden kann und mindestens ein elastisch verschiebbares Glied (202) umfasst, das ausgestaltet ist zum:
Bewegen aus einer Anfangsposition in eine offene Position, in der eine Öffnung in der Barriere (200) gebildet wird, die Eindringen einer Zielnagerspezies in die Ungezieferstation zulässt, nachdem eine Kraft, die über einer Schwellenwertkraft liegt, von der Zielnagerspezies empfangen wurde, und
Rückkehren auf die Anfangsposition bei Wegfall der Kraft;
wobei die Schwellenwertkraft so ist, dass Nichtzielspezies daran gehindert werden, das verschiebbare Glied (202) in die offene Position zu bewegen, wobei die Nichtzielspezies eine Spezies mit unzureichender Kraft zum Ausüben der Schwellenwertkraft und Durchbrechen der Barriere (200) ist, wobei die Barriere für Nichtzielspezies (200) eine Lage (201) umfasst, die gleitfähig in einen Halteabschnitt der Ungezieferstation (100) installierbar ist.

2. Barriere für Nichtzielspezies nach einem der vorhergehenden Ansprüche, wobei die Barriere für Nichtzielspezies (200) aus Pappe oder Kunststoff gebildet ist.

3. Barriere für Nichtzielspezies nach einem der vorhergehenden Ansprüche, umfassend eine unbesetzte Region (203), die im Wesentlichen frei von Material ist, welche das verschiebbare Glied definiert.

4. Barriere für Nichtzielspezies nach einem der vorhergehenden Ansprüche, wobei das verschiebbare Glied (202) integral mit der Barriere (200) gebildet ist.

5. Barriere für Nichtzielspezies nach einem der vorhergehenden Ansprüche, wobei die Barriere für Nichtzielspezies (100) ein oder mehrere im Wesentlichen dreieckige verschiebbare Glieder (202a-f) umfasst.

6. Barriere für Nichtzielspezies nach Anspruch 5, wobei die dreieckigen verschiebbaren Glieder (202a-f) durch eine zickzackförmige unbesetzte Region (203) definiert sind.

7. Barriere für Nichtzielspezies nach einem der vorhergehenden Ansprüche, umfassend eine Grenzregion (204), die sich von mindestens einem Rand der Barriere für Nichtzielspezies einwärts erstreckt.

8. Ungezieferstation (100) zum Fangenfallen einer Zielspezies, umfassend eine Kammer (110), wobei die Ungezieferstation (100) ausgestaltet ist, um eine Barriere für Nichtzielspezies (200) wie in einem der vorhergehenden Ansprüche zu halten, die so positioniert ist, dass Eindringen von Nichtzielspezies in eine Kammer (110) verhindert wird, wobei die Ungezieferstation (100) des Weiteren umfasst:
einen Halteabschnitt, der ausgestaltet ist, um die Barriere für Nichtzielspezies (200) zu halten,
wobei der Halteabschnitt eine Vielzahl von Schlitzen umfasst, jeder Schlitz angeordnet ist, um einen jeweiligen Rand der Barriere für Nichtzielspezies (200) zu halten; und
einen Eingangsbereich, der eine darin gebildete Öffnung (112) umfasst, um Zugang zu der Kammer (110) zuzulassen;
wobei der Halteabschnitt nahe der Öffnung (112) angeordnet ist, so dass die Barriere für Nichtzielspezies, nachdem sie installiert (112) wurde, die Öffnung bedeckt;
wobei die Kammer (110) eine Fallenfang-/Tötungszone (111a,b) umfasst, die funktionell ist, um ein Fallenfang-/Tötungsmittel zu halten.

9. Kit aus Teilen, umfassend eine Ungezieferstation (100) wie in Anspruch 8 definiert und mindestens eine Barriere für Nichtzielspezies (200) wie in den Ansprüchen 1 bis 7 definiert.

10. Verfahren zum Warten einer Ungezieferstation (100) wie in Anspruch 8 definiert, umfassend den Schritt: Installieren einer Barriere für Nichtzielspezies (200) wie in den Ansprüchen 1 bis 7 definiert, um das Eindringen von Nichtzielspezies in eine Kammer (110) der Ungezieferstation (100) zu verhindern.

## Revendications

1. Barrière pour espèces non ciblées (200) adaptée pour empêcher l'entrée d'espèces non ciblées dans une station antiparasitaire (100), **caractérisée en ce que** la barrière pour espèces non ciblées (200) peut être fixée de manière détachable à la station antiparasitaire (100) et comprend au moins un élément déplaçable de manière élastique (202) configuré pour :
se déplacer d'une position initiale à une position ouverte, dans laquelle une ouverture est formée dans la barrière (200) qui permet l'entrée d'une espèce de rongeur cible dans la station antiparasitaire, lors de la réception d'une force supérieure à une force de seuil provenant de l'espèce de rongeur cible, et
retourner vers la position initiale lors du relâchement de la force ;
la force de seuil étant telle que les espèces non ciblées sont empêchées de déplacer l'élément déplaçable (202) vers la position ouverte, l'espèce non ciblée étant une espèce ayant une force insuffisante pour exercer la force de seuil et franchir la barrière (200),
la barrière pour espèces non ciblées (200) comprenant une feuille (201) pouvant être installée de manière coulissante dans une partie de retenue de la station antiparasitaire (100).

2. Barrière pour espèces non ciblées selon n'importe quelle revendication précédente, la barrière pour espèces non ciblées (200) étant formée de carton ou de plastique.

3. Barrière pour espèces non ciblées selon n'importe quelle revendication précédente, comprenant une région vacante (203) sensiblement exempte de matériau, qui définit l'élément déplaçable.

4. Barrière pour espèces non ciblées selon n'importe quelle revendication précédente, l'élément déplaçable (202) étant formé d'un seul tenant avec la barrière (200).

5. Barrière pour espèces non ciblées selon n'importe quelle revendication précédente, la barrière pour espèces non ciblées (100) comprenant un ou plusieurs éléments déplaçables sensiblement triangulaires (202a-f).

6. Barrière pour espèces non ciblées selon la revendication 5, les éléments déplaçables triangulaires (202a-f) étant définis par une région vacante en forme de zigzag (203).

7. Barrière pour espèces non ciblées selon n'importe quelle revendication précédente, comprenant une région de bordure (204) s'étendant vers l'intérieur à partir d'au moins un bord de la barrière pour espèces non ciblées.

8. Station antiparasitaire (100) pour piéger une espèce cible, comprenant une chambre (110), la station antiparasitaire (100) étant configurée pour retenir une barrière pour espèces non ciblées (200) selon n'importe quelle revendication précédente, positionnée de manière à empêcher l'entrée d'espèces non ciblées dans une chambre (110), la station antiparasitaire (100) comprenant en outre :
une partie de retenue, configurée pour retenir la barrière pour espèces non ciblées (200),
la partie de retenue comprenant une pluralité de fentes, chaque fente étant agencée pour retenir un bord respectif de la barrière pour espèces non ciblées (200) ; et
une section d'entrée comprenant une ouverture (112) formée dans celle-ci pour permettre l'accès à la chambre (110) ;
la partie de retenue étant disposée à proximité de l'ouverture (112) de sorte que la barrière pour espèces non ciblées recouvre l'ouverture une fois installée (112) ;
la chambre (110) comprenant une zone de piégeage/élimination (111a, b), utilisable pour retenir un moyen de piégeage/élimination.

9. Kit de pièces comprenant une station antiparasitaire (100) selon la revendication 8 et au moins une barrière pour espèces non ciblées (200) selon les revendications 1 à 7.

10. Procédé d'entretien d'une station antiparasitaire (100) selon la revendication 8, comprenant l'étape de :
l'installation d'une barrière pour espèces non ciblées (200) selon les revendications 1 à 7, de manière à empêcher l'entrée d'espèces non ciblées dans une chambre (110) de la station antiparasitaire (100).
